# EUROPÄISCHE PATENTSCHRIFT

(11) **EP 0 634 203 B1**
(45) Veröffentlichungstag und Bekanntmachung des Hinweises auf die Patenterteilung: **19.08.1998**
(21) Anmeldenummer: 94108173.9
(22) Anmeldetag: 27.05.1994
(51) Int. Cl.: B01D 46/42, F02M 35/04

(54) **Befestigungsvorrichtung für Filtergehäuse, insbesondere Gehäuse von Luftfiltern, an Kraftfahrzeugen**
Attachment construction for filter housing, specially for air filters, fixed to a vehicle
Système de montage pour fixer dans un véhicule le carter d'un filtre, en particulier un filtre à air

(30) Priorität: 17.07.1993 DE 4323985
(43) Veröffentlichungstag der Anmeldung: 18.01.1995
(73) Patentinhaber: KNECHT FILTERWERKE GMBH, 70376 Stuttgart (DE)
(72) Erfinder: Becker, Friedhelm, D-71254 Ditzingen (DE); Stehlig, Jürgen, D-72555 Metzingen (DE)
(74) Vertreter: Patentanwalts-Partnerschaft Rotermund + Pfusch

(56) Entgegenhaltungen:
- DE-A- 4 034 216
- FR-A- 1 025 281
- US-A- 4 227 898
- US-A- 4 273 564

## Beschreibung

Die Erfindung betrifft eine Befestigungsvorrichtung für Filtergehäuse, insbesondere Gehäuse von Luftfiltern, an Kraftfahrzeugen.

Filter werden in Kraftfahrzeugen für verschiedene Zwecke eingesetzt, u. a. als Ölfilter, Benzinfilter, Fahrgastraumfilter und als Luftfilter.

Die Verbindung des Filtergehäuses mit dem Fahrzeug erfolgt meist durch eine oder mehrere Schraubverbindungen, die einen entsprechenden Fertigungsaufwand bedingen:

Zunächst müssen Bohrungen gesetzt werden. Anschließend müssen die Schrauben mit dem richtigen Drehmoment angezogen werden und die Schrauben müssen gegen vibrationsbedingtes Lösen gesichert werden.

Die Schrift US-A-4 227 898 offenbart die Befestigung eines Filtergehäuses an einem Fahrzeug, indem eine im oberen Bereich des Filtergehäuses in einem seitlichen Vorsprung vorgesehene Öse mit einer entsprechenden Öse im Fahrzeugrahmen verschraubt wird. Zusätzlich ist in Einbaurichtung unterhalb dieser Schraubverbindung noch eine Schiebesitzverbindung vorgesehen, bei der ein am Boden des Filtergehäuses angebrachter Zapfen in einen vom Fahrzeugrahmen ausgehenden Träger eingreift. Die Schrift DE-A-4 034 216 offenbart eine bajonettverschlussartige Befestigung eines Filters an einem Rahmen.

Der Erfindung liegt das Problem zugrunde, den Fertigungsaufwand für die Befestigung des Filtergehäuses zu verringern.

Eine Lösung dieses Problems zeigt Anspruch 1 auf. Dabei erfolgt die Befestigung des Filtergehäuses am Fahrzeug durch Rast- oder Schnappverbindungen.

Gemäß einer bevorzugten Ausführungsform ist in die Rast- bzw. Schnappverbindung ein vibrationsdämpfendes Bauelement integriert.

Die Erfindung wird im folgenden anhand eines in der Zeichnung dargestellten Ausführungsbeispiels erläutert:
Es zeigen:

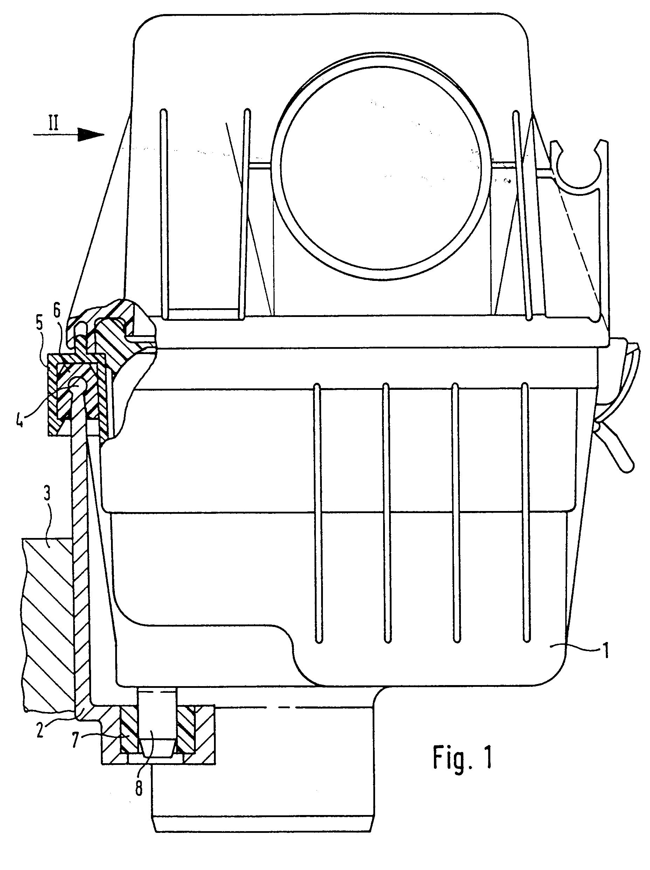

- Fig. 1: eine Ansicht eines Filtergehäuses mit aufgebrochener Schnappverbindung und einen fahrzeugseitigen Filterträger im Schnitt

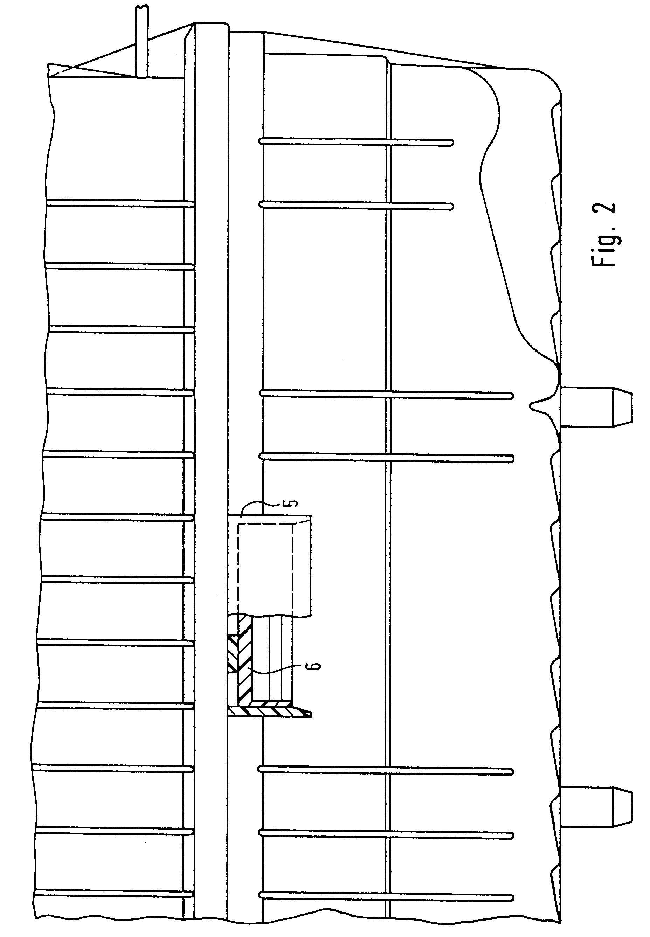

- Fig. 2: das gleiche Filtergehäuse in einer Ansicht nach dem Pfeil II in Fig. 1 mit teilweise aufgebrochener Schnappverbindung

Ein Luftfiltergehäuse 1 ist über einen Luftfilterträger 2 an der Karosserie 3 eines Fahrzeugs befestigt.

Der Luftfilterträger 2 weist in seinem oberen Bereich einen Umfangs bereich eines zylindrischen Bolzens 4 auf.

Am Luftfiltergehäuse 1 ist eine nutartige, in Längsrichtung geschlossene Aufnahme 5 angeformt, in die ein elastisches im Querschnitt U-förmiges Bauteil 6 eingepreßt ist.

Während die Innenform des Bauteils 6 im oberen Bereich einen in etwa dem Durchmesser des Umfangsbereichs des Bolzens 4 entsprechenden Durchmesser aufweist, nimmt die lichte Weite im unteren Bereich etwas ab, so daß das U-Formteil 6 in diesem Bereich bei Durchtritt des Umfangsbereich des Bolzens 4 elastisch verformt wird, bevor der Umfangsbereichs des Bolzen 4 im oberen Bereich mit leichtem Preßsitz einrastet.

In seinem unteren Bereich weist der Luftfilterträger 2 eine Aufnahme für ein elastisches Formteil 7 auf, das zur Aufnahme eines am Luftfilter angeformten Zapfens 8 dient.

Bei der Montage des Luftfiltergehäuses 1 greift der Zapfen 8 in das elastische Formteil 7. Gleichzeitig schnappt der Umfangsbereich des zylindrischen Bolzens 4 in die hinterschnittene Öffnung des elastischen U-Formteils 6.

Hierdurch wird eine dauerhafte, elastische Verbindung des Luftfiltergehäuses 1 mit dem Fahrzeug erreicht.

Im übrigen besteht das Formteil 6 aus einem vibrationsdämpfenden Material, so daß sich Vibrationen des Luftfilters nicht auf das Fahrzeug übertragen können.

## Patentansprüche

1. Befestigungsvorrichtung für Filtergehäuse, insbesondere Gehäuse von Luftfiltern, an Kraftfahrzeugen, wobei
- die Befestigungsvorrichtung als Rast- beziehungsweise Schnappverbindung ausgebildet ist,
- die Verbindung aus einer elastisch verformbaren, im Querschnitt U-förmigen Spange (6 ) mit Hinterschnitt und einem in die Spange einrastbaren Luftfilterträger (2) mit einem in den Hinterschnittbereich einschnapp- oder einrastbaren, komplementär zum Hinterschnittbereich ausgebildeten Einschiebebereich (4) besteht, bei der die Spange (6) mit dem Filtergehäuse (1) und der Luftfilterträger (2) mit dem Fahrzeug verbunden ist,
- das Gewicht des Filtergehäuses (1) in Einrastrichtung wirkt,
- die Befestigungsvorrichtung zusätzlich zu den Rastbeziehungsweise Schnappverbindungsmitteln mit getrennt angeordneten Mitteln (7, 8) für eine Schiebesitzverbindung versehen ist, wobei die Schiebesitzverbindung in Einbaulage des Filtergehäuses mit Abstand unterhalb der Rast- beziehungsweise Schnappverbindung entfernt liegt.

2. Vorrichtung nach Anspruch 1,
**dadurch gekennzeichnet,**
daß in die Verbindungsteile der Befestigungsvorrichtung Dämpfungselemente integriert sind.

## Claims

1. Fastening device for a filter housing, in particular air filter housing on motor vehicles, wherein
- the fastening device is designed as a catch or snap connection,
- the connection consists of an elastically deformable clasp (6) which is U-shaped in cross section and has an undercut and of an air filter carrier (2) which is capable of catching in the clasp and has an insertion region (4) capable of snapping or catching in the undercut region and designed to mate with the undercut region, in which the clasp (6) is connected to the filter housing (1) and the air filter carrier (2) to the vehicle,
- the weight of the filter housing (1) acts in the catching direction,
- the fastening device is provided with separately arranged means (7, 8) for a sliding fit connection in addition to the catch or snap connecting means, the sliding fit connection being located at a distance beneath the catch or snap connection in the fitting position of the filter housing.

2. Device according to claim 1, characterized in that damping elements are integrated in the connecting parts of the fastening device.

## Revendications

1. Dispositif de fixation de boîtiers de filtres, en particulier de boîtiers de filtres à air, sur des véhicules automobiles,
- ce dispositif étant un joint à encliquetage ou enclenchement,
- ce joint étant constitué d'une agrafe à section en forme de U (6) à contre-dépouille et déformable élastiquement et d'un porte-filtre (2) encliquetable dans cette agrafe et comportant une partie à introduire (4) de forme complémentaire de celle de la partie à contre-dépouille et enclenchable ou encliquetable dans celle-ci, l'agrafe (6) étant jointe au boîtier de filtre (1) et le porte-filtre (2) joint au véhicule,
- le poids du boîtier de filtre (1) agissant dans la direction d'encliquetage,
- le dispositif de fixation étant pourvu, en plus des moyens de jonction par encliquetage ou enclenchement, de moyens placés séparément (7, 8) pour une jonction à ajustement glissant, cette jonction étant, lorsque le boîtier de filtre est monté, située une certaine distance au-dessous du joint à encliquetage ou enclenchement.

2. Dispositif selon la revendication 1, caractérisé par le fait que des éléments amortisseurs sont intégrés aux éléments de jonction du dispositif de fixation.
